(19) **Europäisches Patentamt / European Patent Office / Office européen des brevets**

(11) **EP 3 071 034 B1**

(12) **EUROPEAN PATENT SPECIFICATION**

(45) Date of publication and mention
of the grant of the patent:
**26.12.2018 Bulletin 2018/52**

(21) Application number: **14824096.3**

(22) Date of filing: **19.11.2014**

(51) Int Cl.:
*A01N 33/12* (2006.01)    *A01N 37/42* (2006.01)
*A01N 25/04* (2006.01)    *A01P 21/00* (2006.01)

(86) International application number:
**PCT/IB2014/066160**

(87) International publication number:
**WO 2015/075646 (28.05.2015 Gazette 2015/21)**

(54) **READY MIX MICROEMULSION FORMULATION**

MIKROEMULSIONSFORMULIERUNG IN FORM EINER FERTIGMISCHUNG

FORMULATION DE MICRO-ÉMULSION PRÊTE À L'EMPLOI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2013 US 201361906486 P**

(43) Date of publication of application:
**28.09.2016 Bulletin 2016/39**

(73) Proprietor: **Adama Celsius B.V., Amsterdam (NL), Schaffhausen
Branch
8200 Schaffhausen (CH)**

(72) Inventors:
• **WINDREICH, Shlomo**
  **5237699 Ramat-Gan (IL)**
• **NAHMOUD, Sergio**
  **7775113 Ashdod (IL)**

(74) Representative: **Modiano, Micaela Nadia et al
Modiano & Partners
Thierschstrasse 11
80538 München (DE)**

(56) References cited:
**WO-A1-03/015512    WO-A1-2012/130924**

• **DATABASE CAPLUS [Online] CHEMICAL ABSTRACTS SERVICE, COLUMBUS, OHIO, US; JAKUBIAK, EWA ET AL: "Evaluation of growth regulators in spelt wheat", XP002736497, retrieved from STN Database accession no. 2013:1776112 & JAKUBIAK, EWA ET AL: "Evaluation of growth regulators in spelt wheat", PROGRESS IN PLANT PROTECTION , 53(1), 87-90 CODEN: PPLPF3; ISSN: 1427-4337, 30 March 2013 (2013-03-30), DOI: 10.14199/PPP-2013-122 10.14199/PPP-2013-122**

• **DATABASE CAPLUS [Online] CHEMICAL ABSTRACTS SERVICE, COLUMBUS, OHIO, US; GRZYS, EDWARD ET AL: "Effect of growth retardants on the contents of selected macroelements in winter wheat cultivars", XP002736498, retrieved from STN Database accession no. 2013:1776084 & GRZYS, EDWARD ET AL: "Effect of growth retardants on the contents of selected macroelements in winter wheat cultivars", PROGRESS IN PLANT PROTECTION , 52(4), 893-897 CODEN: PPLPF3; ISSN: 1427-4337, 2012,**

**Description**

FIELD OF THE PRESENT SUBJECT MATTER

The present subject matter relates to a ready mix microemulsion formulation for regulating plant growth, improving nutrient uptake, and preventing plant lodging, and methods thereof.

BACKGROUND OF THE PRESENT SUBJECT MATTER

Lodging is a phenomenon whereby the stalks or stems of plants are displaced from an upright position. In other words, lodging is used to describe regions of fields or sometimes whole fields that have fallen flat on the ground. Severe lodging is a costly problem because it can affect both crop yield and yield quality. This is due to lodging's effects on grain formation and associated harvesting problems and losses. It takes about twice the amount of time to harvest a lodged crop than a standing one. Moreover, secondary growth in combination with flattened crops make harvesting difficult. In addition, lodging can make no-tilling difficult as a result of the volume of residue (straw leftovers).

Lodging alters plant growth and development. It affects flowering and reduces photosynthetic capabilities of the plant. Furthermore, severe lodging interferes with the transport of nutrients and moisture from the soil, and, therefore, affects food storage in the developing kernels. Lodging always results in yield loss. If permanent lodging occurs shortly after heading, the yield reduction can be as high as 40%. In addition, lodging frequently results in uneven maturity, high moisture content, and a loss of grain quality due to sprouting and possible molding. Excessive moisture will usually delay harvest and may necessitate grain drying.

Lodging is reported to be one of the most prevalent factors in preventing high yields from increased nitrogen fertilization, especially during humid conditions. The effect of lodging on a particular yield will depend on the growth stage of the plant, the weather conditions, and the severity of the lodging. If a crop lodges before flowering, the culms (stem) may regain their upright position under favorable weather conditions. However, the crop will be easily lodged under adverse weather conditions, which will result in deformed heads and shriveled kernels. When a crop lodges at some point after flowering, the heads are unable to regain their upright position. Although kernel numbers are not affected, lodging at this stage can result in severely reduced grain weight, depending on the weather conditions after the crop lodges. Yield losses are greatest (about 15%-40%) when a crop lodges during the ten days after head emergence. Lodging that occurs after the plant matures will not affect the yield but it severely reduces the amount of harvestable grain due to neck breakage and whole head loss.

Lodging can occur as a result of morphological (structural) plant traits and environmental conditions. Cereal crops, such as tall, weak-stemmed wheat cultivar are particularly prone to lodging. In addition, lodging can also result from failure of the root system. For example, lodging can occur due to irreversible bending and breaking of the lower internodes or by uprooting. Therefore, a well-developed root system is important for providing resistance to lodging. Furthermore, weather conditions, such as rain, wind, and/or hail can also increase a given plant's tendency to lodge.

As mentioned, the tendency of a crop to lodge is dependent on its stalk length. A crop's ability to withstand lodging also depends on the length of the stems, particularly the length of the peduncle (the distance from the last node to the base of the head). A number of factors will increase the length of the stem, including the genetic potential of the cultivar, high fertility level, nitrogen, and low solar radiation during the formative growth (in other words, cloudy weather), and stem diameter and stem-wall thickness, particularly at the basal internodes. Plant morphological (structural) characteristics, including plant height, wall thickness, and cell wall lignification can affect the ability of the plant to resist a lateral force. Accordingly, tall plants have a higher tendency to lodge than shorter plants. Even a small change in plant height can strongly influence a given plant's potential to lodge.

The problems caused by lodging has led to an increased use of plant growth regulators, which limit the vertical growth of the plant stem and increase the diameter and thickness of the stem. In addition, plant growth regulators improve rooting by increasing the chlorophyll content in the leaves, which stimulates the growth of roots and favorably impacts the uptake of nutrients and the transport of assimilates in plants.

Plant growth regulators operate via various mechanisms. For example, onium-type plant growth retardants, such as chlormequat-chloride and mepiquat-chloride, which possess a positively charged ammonium, phosphonium or sulphonium group, function by blocking the synthesis of gibberellin early in the biosynthetic pathway. Plant growth retardants comprising a nitrogen-containing heterocycle, such as flurprimidol, paclobutrazol and uniconazole-P, act as inhibitors of monooxygenases that catalyze oxidative steps in gibberellin biosynthesis. Acylcyclohexanediones, such as trinexapac-ethyl and prohexadione-calcium, interfere with the late steps of gibberellin biosynthesis. Finally, other plant growth regulators, such as mefluidide, inhibit cell division and differentiation.

In some cases, active ingredients have been shown to be more effective when mixed with other active ingredients. For example, trinexapac-ethyl and chlormequat chloride have been shown to be effective when applied both individually and together. In "Effect of growth regulators on winter wheat varieties," Progress in Plant Protection (2006), 46(2): 246-48, the effect of differing mixtures of trinexapac-ethyl and chlormequat chloride on 19 winter wheat varieties was investigated. Similarly, in "Influence of growth regulator Moddus 250 EC (trinexapac ethyl) on group, yield, and grain quality of winter wheat," Progress in Plant Protection (2003), 43(2): 859-62, the influence of a mixed application of Moddus 250 EC (trinexapac ethyl) and Antywylegacz plynny 725 (chlormequat chloride) on the prevention of lodging in winter wheat was studied. Likewise, "Biological evaluation of retardants in spring barley," Progress in Plant Protection (2004), 44(2): 962-65, tested the effectiveness of Moddus 250 EC and Antywylegacz Plynny 675 SL at different growth stages of spring barley. In addition, "Application of plant growth regulators Moddus 250 EC and Antywylegacz Plynny 675 SL (CCC) in winter wheat," Progress in Plant Protection (2004) 44(2): 823-27, carried out field experiments to evaluate the activity of the mixture of Moddus 250 EC and Antywylegacz Plynny 675 SL in winter wheat. Finally, U.S. Patent Application Publication No. 2003/0118614 relates to the synergistic effect of an additive on an active ingredient combination of CCC (chlormequat chloride) and Moddus (trinexapec) in a tank mix composition, wherein the additive was a water-in-oil emulsion of sodium acrylate/acrylamide-copolymer and a fatty acid ester WO 2012/130924 discloses a composition comprising a plant growth regulator, such as trinexapac-ethyl or chlormequat chloride, and a surfactant.

However, none of the above described references disclose a ready mix microemulsion composition for plant growth regulation and the prevention of lodging. Rather the above references are directed to tank mix compositions, wherein two or more chemicals are packaged separately and mixed in a sprayer tank. Tank mix compositions are unstable, require a high amount of solvents, and are complicated to use. Accordingly, there remains a need in the art to develop an effective and stable formulation for preventing lodging, which contains environmental friendly solvents and is ready to use.

SUMMARY OF THE PRESENT SUBJECT MATTER

The present subject matter relates to a ready mix microemulsion formulation, which is stable and ready to use. In addition, the ready mix microemulsion formulation is unexpectedly efficient in regulating plant growth, preventing and/or reducing lodging, improving nutrient uptake, enhancing root system, enhancing crop plants, and improving plant yield by limiting the vertical growth of the plant stem, increasing the diameter and thickness of the stem, and improving rooting, *inter alia.* In one aspect, the ready mix microemulsion formulation is packaged within a single vessel and is ready to use immediately. In another aspect, the present ready mix microemulsion formulation is ready to use directly after dilution. Therefore, the present subject matter provides a number of advantages over tank mixes, including simplicity of use, stability, and increased effectiveness.

According to one aspect, the present subject matter provides a ready mix microemulsion formulation comprising a combination of trinexapac-ethyl and chlormequat chloride. In one aspect, the ready mix microemulsion formulation comprises a stable ratio of ingredients.

In a further aspect of the present subject matter, the ready mix microemulsion formulation contains environmentally friendly solvents, such as methylated rape seed oil. In addition, the ready mix microemulsion formulation requires a lower amount of solvents than known tank mixes. Moreover, the present ready mix microemulsion formulation does not contain cross-linked polymers or water-in-oil emulsifiers.

In another aspect, the present subject matter provides a method for regulating plant growth comprising applying to a plant an effective amount of the ready mix microemulsion formulation described herein. In addition, the present subject matter provides a method for improving plant yield comprising applying to a plant an effective amount of the ready mix microemulsion formulation described herein. Furthermore, the present subject matter provides a method for preventing and/or reducing lodging of crop plants comprising applying to a plant an effective amount of the ready mix microemulsion formulation described herein. Finally, the present subject matter provides a method for improving nutrient uptake by plants, comprising applying to a plant an effective amount of the ready mix microemulsion formulation described herein. In another aspect the present subject matter provides a method for improving root system comprising applying to a plant an effective amount of the ready mix microemulsion formulation described herein.

Although the combination of trinexapac-ethyl and chlormequat chloride has been studied, a stable ready to use microemulsion formulation of trinexapac-ethyl and chlormequat has not been disclosed. This is likely due to the difficulty in combining trinexapac, which is in an organic phase, with chlormequat chloride, which is in an aqueous solution, into one formulation. The salt of chlormequat interferes with the surfactants typically found in a trinexapac formulation. However, the present microemulsion formulation has avoided this interference by combining the compounds using a mixture of solvents. As a result, the present ready use microemulsion formulation is more stable, simpler to use, and more effective than known tank mixes.

BRIEF DESCRIPTION OF THE DRAWINGS

Various embodiments will be described in detail with reference to the accompanying drawings.

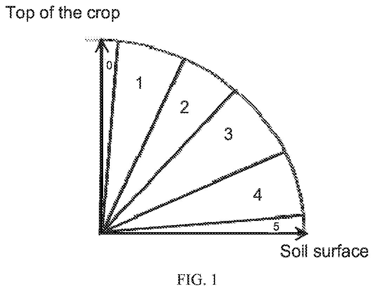

**FIG. 1** illustrates the six classes of plant lodging.

DETAILED DESCRIPTION OF THE PRESENT SUBJECT MATTER

Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the phrase "enhancing crop plants" means improving one or more of plant quality, vigor, nutrient uptake, root strength, and/or tolerance to stress factors, any of which may lead to improved yield.

As used herein, the phrase "enhancing roots system" means the roots system is improved qualitatively or quantitatively in plants to which the ready mix microemulsion formulation described herein has been applied as compared to the roots systems in a control plant grown under the same conditions with exception of the application of the ready mix microemulsion formulation. Enhanced roots system include but are not limited to improved visual appearance and composition of the roots system (*i.e.,* improved color, density, uniformity, and visual appearance), increased root growth, a more developed root system, stronger and healthier roots, improved plant stand, and increased roots system weight.

As used herein, the phrase "improving nutrient uptake" or "increasing nutrient uptake" means the uptake of one or more nutrients is improved qualitatively or quantitatively in plants to which the ready mix microemulsion formulation described herein has been applied as compared to the nutrient uptake in a control plant grown under the same conditions with exception of the application of the ready mix microemulsion formulation. Such nutrients include but are not limited to nitrogen, phosphorus, potassium, calcium, copper, zinc, sulfur, and magnesium.

As used herein, the phrase "improving plant quality" means that one or more traits are improved qualitatively or quantitatively in plants to which the ready mix microemulsion formulation, described herein, has been applied as compared to the same trait in a control plant grown under the same conditions with exception of the application of the ready mix microemulsion formulation. Such traits include but are not limited to improved visual appearance and composition of the plant (*i.e.,* improved color, density, uniformity, compactness), reduced ethylene (reduced production and/or inhibition of reception), improved visual appearance and composition of harvested material (*i.e.,* seeds, fruits, leaves, vegetables), improved carbohydrate content (*i.e.,* increased quantities of sugar and/or starch, improved sugar acid ratio, reduction of reducing sugars, increased rate of development of sugar), improved protein content, improved oil content and composition, improved nutritional value, reduction in anti-nutritional compounds, increased nutrient uptake, stronger and healthier roots, improved organoleptic properties (*i.e.,* improved taste), improved consumer health benefits (*i.e.,* increased levels of vitamins and antioxidants), improved post-harvest characteristics (*i.e.,* enhanced shelf-life and/or storage stability, easier processability, easier extraction of compounds), and/or improved seed quality (*i.e.,* for use in following seasons).

As used herein, the phrase "improving plant vigor" means that one or more traits are improved qualitatively or quantitatively in plants to which the ready mix microemulsion formulation, described herein, has been applied as compared to the same trait in a control plant grown under the same conditions with exception of the application of the ready mix microemulsion formulation. Such traits include but are not limited to early and/or improved germination, improved emergence, the ability to use less seeds, increased root growth, a more developed root system, stronger and healthier roots, increased shoot growth, increased tillering, stronger tillers, more productive tillers, increased or improved plant stand, decreased plant lodging, an improvement in plant height, an increase in plant weight (fresh or dry), bigger leaf blades, greener leaf color, increased pigment content, increased photosynthetic activity, earlier flowering, homogenous flowering, longer panicles, early grain maturity, increased seed, fruit, or pod size, increased pod or ear number, increased seed number per pod or ear, increased seed mass, enhanced seed filling, less dead basal leaves, delay of senescence, improved vitality of the plant and/or less inputs needed (*i.e.,* less fertilizer, water, and/or labor).

As used herein, the phrase "improving tolerance to stress factors" means that one or more traits are improved qualitatively or quantitatively in plants to which the ready mix microemulsion formulation, described herein, has been applied as compared to the same trait in a control plant grown under the same conditions with exception of the application of the ready mix microemulsion formulation. Such traits include but are not limited to increased tolerance and/or resistance to abiotic stress factors, which cause suboptimal growing conditions such as drought (*i.e.,* any stress which leads to a lack of water content in plants, a lack of water uptake potential or a reduction in the water supply to plants), cold exposure, heat exposure, osmotic stress, UV stress, flooding, increased salinity (*i.e.,* in the soil), increased mineral exposure, ozone exposure, high light exposure and/or limited availability of nutrients (*i.e.,* nitrogen and/or phosphorous nutrients).

As used herein, the phrase "improving plant yield" or "improving yield" means that where it is possible to take a quantitative measurement, the yield of a product of the respective plant is increased by a measurable amount over the yield of the same product of a plant produced under the same conditions, but without application of the ready mix microemulsion formulation, described herein. Such an improvement in yield includes but is not limited to (a) an increase in biomass production, grain yield (*i.e.,* grain size, grain number, grain density), starch content, oil content, and/or protein content, which may result from (i) an increase in the amount produced by the plant *per se,* or (ii) an improved ability to harvest plant matter; (b) an improvement in the composition of the harvested material (*i.e.,* improved sugar acid ratios, improved oil composition, increased nutritional value, reduction of anti-nutritional compounds, increased consumer health benefits); and/or (c) an increased/facilitated ability to harvest the crop, improved processability of the crop, and/or better storage stability/shelf life.

As used herein, the term "lodging" refers to a phenomenon whereby the stalks or stems of plants are displaced from an upright position.

As used herein, the term "microemulsion" means a thermodynamically stable, isotropic liquid mixture of water immiscible organic solution, water, and surfactant, wherein microemulsions are formed spontaneously upon simple mixing of the components.

As used herein, the term "mixture" or "combination" refers, but is not limited to, a combination in any physical form, e.g., blend, solution, alloy, or the like.

As used herein, the term "plants" refers to any and all physical parts of a plant, including but not limited to seeds, seedlings, saplings, roots, tubers, stems, stalks, foliage, and fruits.

As used herein, the phrase "plant growth regulation" or "regulating plant growth" includes restricting vertical stem growth, promoting root growth, stunting, increasing stem diameter and stem-wall thickness, and the like.

As used herein, the phrase "preventing and/or reducing lodging" means preventing or reducing the phenomenon whereby the stalks or stems of plants are displaced from an upright position and/or increasing a plant's resistance to said phenomenon by enhancing crop plants and regulating plant growth.

As used herein, the phrase "ready mix" means a preparation containing most or all of the ingredients.

As used herein, the phrase "ready to use" means compositions which include all necessary ingredients and for which there is no need to add further excipients.

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic surfactants.

As used herein, the phrase "tank mix" means two more chemicals that are packaged separately and must be mixed in the sprayer tank.

The term "a" or "an" as used herein includes the singular and the plural, *unless specifically stated* otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of' or "consisting of."

Ready Mix Microemulsion Formation

The present subject matter relates to a ready mix microemulsion formulation for regulating plant growth, enhancing crop plants, increasing nutrient uptake, enhancing root system, and reducing or preventing lodging comprising trinexapac-ethyl and chlormequat chloride. The ready mix microemulsion formulation is unexpectedly efficient in one or more of regulating plant growth, preventing lodging, increasing nutrient uptake, enhancing crop plants, and improving plant yield by limiting the vertical growth of the plant stem, increasing the diameter and thickness of the stem, and/or improving rooting, *inter alia.* In one aspect, the ready mix microemulsion formulation is packaged within a single vessel and is ready to use immediately. In another aspect, the present ready mix microemulsion formulation is ready to use directly after dilution. Therefore, the present subject matter provides a number of advantages over tank mixes, including simplicity of use, stability, and increased effectiveness.

According to one aspect, the present subject matter provides a ready mix microemulsion formulation comprising a combination of trinexapac-ethyl and chlormequat chloride. In one embodiment, the ready mix microemulsion formulation comprises trinexapac-ethyl in an amount ranging from 0.1 to 25% w/w, preferably 0.1 to 20% w/w, more preferably 0.1 to 15% w/w, more preferably 0.1 to 10% w/w, and most preferably 0.1 to 5% w/w based on the total weight of the composition. The ready mix microemulsion formulation comprises chlormequat chloride in an amount ranging from 5 to 50% w/w, preferably 5 to 40% w/w, more preferably 10 to 35% w/w, more preferably 10 to 30% w/w, and most preferably 20 to 30% w/w based on the total weight of the composition.

In one aspect, the ready mix microemulsion formulation comprises a stable ratio of ingredients. In one embodiment, the ready mix microemulsion formulation comprises a ratio of trinexapac-ethyl to chlormequat chloride ranging from 1:60 to 5:12, preferably 1:35 to 1:4, more preferably 1:24 to 1:6; and most preferably 1:15 to 1:10.

In one embodiment, the ready mix microemulsion formulation further comprises one or more components including, but not limited to, solvents, solubilizer, and surfactants. In one embodiment of the present subject matter, the ready mix microemulsion formulation requires a lower amount of solvents than known tank mixes. In another embodiment, the present ready mix microemulsion formulation does not contain cross-linked polymers or water-in-oil emulsifiers. In a further embodiment, the ready mix microemulsion formulation contains environmentally friendly solvents, such as methylated rape seed oil.

The ready mix microemulsion formulation can include, but is not limited to, one or more of the following solvents: water, vegetable oils, alkylated vegetable oils such as methylated rape seed oil, alkylated naphthalenes, petroleum naphtha, crop oils, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropylene glycol dibenzoate, diproxitol, alkyl pyrrolidinone, N-methyl-2-pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, xylene, m-xylene, n-hexane, n-octylamine, octadecanoic acid, octyl amine acetate, oleic acid, oleylamine, o-xylene, phenol, polyethylene glycol (PEG400), propionic acid, ethylene glycol, propylene glycol, propylene glycol monomethyl ether, glycerine, p-xylene, toluene, triethyl phosphate, triethylene glycol, xylene sulfonic acid, paraffin, mineral oil, trichloroethylene, perchloroethylene, ethyl acetate, amyl acetate, butyl acetate, methanol, ethanol, isopropanol, and higher molecular weight alcohols such as amyl alcohol, tetrahydrofurfuryl alcohol, hexanol, octanol, and the like.

In a preferable embodiment, the ready mix microemulsion formulation comprises the following solvents: water, propylene glycol, dipropylene glycol, and methylated rape seed oil. In one embodiment, the total amount of solvents in the ready mix microemulsion formulation ranges from 10 to 80% w/w, preferably 20 to 70% w/w, more preferably 20 to 60% w/w, more preferably 30 to 50% w/w, and most preferably 35 to 45% w/w based on the total weight of the composition.

In a preferable embodiment, the ready mix microemulsion formulation comprises methylated rape seed oil in an amount ranging from 0.1 to 20% w/w, preferably 0.5 to 15% w/w, more preferably 1 to 10% w/w, and most preferably 1 to 7% w/w, based on the total weight of the composition.

Preferably, the ready mix microemulsion formulation comprises dipropylene glycol in an amount ranging from 0.1 to 30% w/w, preferably 1 to 20% w/w, more preferably 1 to 15% w/w, more preferably 5 to 15% w/w, and most preferably 8 to 13% w/w, based on the total weight of the composition.

In a preferred embodiment, the ready mix microemulsion formulation comprises propylene glycol in an amount ranging from 0.1 to 30% w/w, preferably 1 to 20% w/w, more preferably 1 to 15% w/w, more preferably 5 to 15% w/w, and most preferably 8 to 13% w/w, based on the total weight of the composition.

In a preferred embodiment, the ready mix microemulsion formulation comprises water in an amount ranging from 0.1 to 30% w/w, preferably 1 to 20% w/w, more preferably 5 to 20% w/w, more preferably 7 to 17% w/w, and most preferably 10 to 17% w/w, based on the total weight of the composition.

In another embodiment, the ready mix microemulsion formulation further comprises one or more solubilizers, which can include but are not limited to ethylene carbonate, propylene carbonate, polypropylene carbonate, diethyl carbonate, pyrrolidone, N-methyl-2-pyrrolidone, N-ethylpyrrolidone, dimethyl sulfoxide, N-butylpyrrolidone, N-octylpyrrolidone, 2-pyrrolidone, diisopropyl ether, diethylether, methyl tert-butyl ether, dioxane, tetrahydrofuran acetone, methyl ethyl ketone, acetamide, N,N-dimethylacetamide, N,N-dimethylformamide, acetonitrile, and propionitrile.

In a preferable embodiment, the ready mix microemulsion formulation comprises propylene carbonate as the solubilizer. In one embodiment, the total amount of solubilizer in the ready mix microemulsion formulation ranges from 0.1 to 20% w/w, more preferably 0.1 to 15% w/w, more preferably 0.1 to 10% w/w, more preferably 0.5 to 5% w/w, and most preferably 0.5 to 2% w/w based on the total weight of the composition.

In a further embodiment, the ready mix microemulsion formulation comprises one or more surfactants, which can include but are not limited to alkali metal, alkaline earth metal and ammonium salts of aromatic sulfonic acids, such as ligninsoulfonic acid, phenolsulfonic acid, naphthalenesulfonic acid, dibutylnaphthalene-sulfonic acid, and fatty acids, alkylsulfonates, alkyl aryl sulfonates, alkyl sulfates, lauryl ether sulfates, fatty alcohol sulfates, and sulfated hexa-, hepta-, and octa- decanolates, sulfated fatty alcohol glycol ethers, furthermore condensates of naphthalene or of naphthalenesulfonic acid with phenol and formaldehyde, polyoxyethylene octylphenyl ether, ethoxylated isooctylphenol, octylphenol, nonylphenol, alkylphenyl polyglycol ethers, tributylphenyl polyglycol ether, tristearyl phenyl polyglycol ether, Isotridecyl alcohol polyglycol ether (Genapol® x-080, Clariant, Switzerland), alkoxylated fatty alcohols, alkylaryl polyether alcohols, alcohol and fatty alcohol/ethylene oxide condensates, castor oil ethoxylate (Emulsogen® el-400, Clariant, Switzerland), tallow amine ethoxylate (Terwet® 3780, Huntsman, U.S.A.), polyoxyethylene alkyl ethers, ethoxylated polyoxypropylene, ethoxylated polysorbate, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols, polycarboxylates, polyalkoxylates, polyvinylamines, dodecylbenzene sulphonate-isopropylamine (Libramul® IPA, Libra Specialty Chemicals, LTD., United Kingdom), polyvinylpyrrolidone and any salts thereof.

In a preferable embodiment, the ready mix microemulsion formulation comprises the following surfactants: Iso-tridecyl alcohol polyglycol ether, castor oil ethoxylate, dodecyl benzene sulphonate-isopropylamine, tallow amine ethoxylate and/or salts thereof. In one embodiment, the total amount of surfactant in the ready mix microemulsion formulation ranges from 1 to 50% w/w, more preferably 5 to 40% w/w, more preferably 10 to 40% w/w, more preferably 20 to 40% w/w, and most preferably 25 to 40% w/w based on the total weight of the composition.

In one embodiment, Iso-tridecyl alcohol polyglycol ether (Genapol® x-080, Clariant, Switzerland) is present in an amount ranging from 0.1 to 20% w/w, preferably 0.1 to 15% w/w, more preferably, 0.5 to 10% w/w, and most preferably 1 to 5% w/w based on the total weight of the composition.

In another embodiment, castor oil ethoxylate (Emulsogen® el-400, Clariant, Switzerland) is present in an amount ranging from 0.1 to 20% w/w, preferably 0.1 to 10% w/w, more preferably 0.1 to 5% w/w, and most preferably 0.1 to 1% w/w based on the total weight of the composition.

In one embodiment, dodecylbenzene sulphonate-isopropylamine (Libramul® IPA, Libra Specialty Chemicals, LTD., United Kingdom) is present in the ready mix microemulsion formulation in an amount ranging from 0.1 to 20% w/w, preferably 0.1 to 15% w/w, more preferably 0.1 to 10% w/w, and most preferably 0.1 to 5% w/w, based on the total weight of the composition.

In a further embodiment, tallow amine ethoxylate (Terwet® 3780, Huntsman, U.S.A.) is present in an amount ranging from 1 to 60% w/w, preferably 5 to 50% w/w, more preferably 10 to 40% w/w, more preferably 20 to 40% w/w, and most preferably 25 to 35% w/w, based on the total weight of the composition.

In a preferred embodiment, the ready mix microemulsion formulation comprises trinexapac-ethyl and chlormequat chloride and further comprises one or more solvents, solubilizers, and surfactants; wherein the solvents comprise water, glycols and methylated seed oils, and combinations thereof; wherein the solubilizer comprises propylene carbonate, *N*-Methyl-2-pyrrolidone, DMSO; and wherein the surfactants comprises tallow amine ethoxylate, iso-tridecyl alcohol polyglycol ether, dodecylbenzene sulphonate-isopropylamine, alkoxylated fatty alcohols, ethoxylated polysorbate, ethoxylated castor oil salts thereof, and combinations thereof.

In a particularly preferred embodiment, the ready mix microemulsion formulation comprises trinexapac-ethyl and chlormequat chloride and further comprises one or more solvents, solubilizers, and surfactants; wherein the solvents comprise water, dipropylene glycol, propylene glycol, and methylated rape seed oil; wherein the solubilizer comprises propylene carbonate; and wherein the surfactants comprises tallow amine ethoxylate, dodecylbenzene sulphonate-isopropylamine, castor oil ethyoxylate, iso-tridecyl alcohol polyglycol ether, and salts thereof. In a preferred embodiment, the ready mix microemulsion formulation is packaged within a single vessel and is ready to use directly after dilution.

Although the combination of trinexapac-ethyl and chlormequat chloride has been studied, a stable ready to use microemulsion formulation of trinexapac-ethyl and chlormequat has not been disclosed. This is likely due to the difficulty in combining trinexapac, which is in an organic phase, with chlormequat chloride, which is in an aqueous solution, into one formulation. The salt of chlormequat interferes with the surfactants in the trinexapac formulation. However, the present microemulsion formulation has unexpectedly avoided this interference by combining the compounds using a mixture of solvents and surfactants. Specifically, the present subject matter relates to a ready mix microemulsion formulation, wherein trinexapac-ethyl and chlormequat chloride have been combined using a mixture of solvents and surfactants. In a preferred embodiment, the mixture of glycols comprises propylene glycol and dipropylene glycol.

The present ready mix microemulsion formulation may further comprise one or more additional components, as known in the art, including but not limited to solid diluents, liquid diluents, wetting agents, adhesives, thickeners, binders, fertilizers, or anti-freeze agents. In addition, the present formulation may also further comprise additional crop protection agents known in the art, for example pesticides, safeners, agents for controlling phytopathogenic fungi or bacteria, and the like.

Method of Use

The present subject matter also relates to a method for preventing and/or reducing lodging of plants comprising applying to one or more plants an effective amount of the ready mix microemulsion formulation, as described herein. Likewise, the present subject matter relates to a method for regulating plant growth comprising applying to one or more plants an effective amount of the ready mix microemulsion formulation described herein. The present subject matter also relates to a method of improving plant yield comprising applying to one or more plants an effective amount of the ready mix microemulsion formulation described herein.

In a further embodiment, the present subject matter also relates to a method for enhancing crop plants comprising applying to one or more plants an effective amount of the ready mix microemulsion formulation described herein.

In another embodiment, the present subject matter relates to a method for improving the uptake of one or more nutrients by one or more plants comprising applying to one or more plants an effective amount of the ready mix microemulsion formulation described herein. The nutrients can include one or more selected from the group consisting of nitrogen, phosphorus, potassium, calcium, magnesium, copper, zinc, sulfur, and combinations thereof.

Copper has been shown to positively influence the stability of chlorophyll, improve photosynthesis, and improve nitrogen metabolism. In addition, copper supports apical dominance, and therefore, has a positive effect on the length and filling of the spike in cereal plants.

In another embodiment, the ready mix microemulsion formulation enhances roots system, and thus provides stronger and healthier roots by applying to one or more plants an effective amount of the ready mix microemulsion formulation described herein.

The methods of the present subject matter may be applied to any crop plants, including but not limited to monocotyledons such as cereals (wheat, millet, sorghum, rye, triticale, oats, barley, teff, spelt, buckwheat, fonio, and quinoa), rice, maize (corn), and/or sugar cane; or dicotyledon crops such as beet (such as sugar beet or fodder beet); fruits (such as pomes, stone fruits, or soft fruits, for example apples, pears, plums, peaches, almonds, cherries, strawberries, raspberries, or blackberries); leguminous plants (such as beans, lentils, peas, or soybeans); oil plants (such as rape, mustard, poppy, olives, sunflowers, coconut, castor oil plants, cocoa beans, or groundnuts); cucumber plants (such as marrows, cucumbers or melons); fiber plants (such as cotton, flax, hemp, or jute); citrus fruit (such as oranges, lemons, grapefruit, or mandarins); vegetables (such as spinach, lettuce, cabbages, carrots, tomatoes, potatoes, cucurbits, or paprika); lauraceae (such as avocados, cinnamon, or camphor); tobacco; nuts; coffee; tea; vines; hops; durian; bananas; natural rubber plants; and ornamentals (such as flowers, shrubs, broad-leaved trees, or evergreens, for example conifers).

In one embodiment the plants are monocotyledonous plants, more preferably, cereals, in particular wheat or barley. In a specific embodiment, the cereal crop is wheat. In another specific embodiment, the cereal crop is triticale. In another specific embodiment, the cereal crop is rye. In another specific embodiment, the cereal crop is oat. In a further embodiment, the cereal crop is barley. In another embodiment, the crop plants are rice plants. In still another embodiment, the crop plants are sugar cane plants. In yet another embodiment, the crop plants are corn plants.

In another embodiment, the crop plants are dicotyledonous plants. In one embodiment, the crop plants are oil seed rape plants. Crops include those that have been rendered tolerant to herbicides like bromoxynil or classes of herbicides (such as HPPD inhibitors, ALS inhibitors (for example primisulfuron, prosulfuron and trifloxysulfuron), EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering.

The plants also include plants that have been transformed by the use of recombinant DNA techniques so that they are capable of synthesizing one or more selectively acting toxins, such as are known, for example, from toxin-producing bacteria, especially those of the genus Bacillus. Crops also includes plants which have been transformed by the use of recombinant DNA techniques so that they are capable of synthesizing antipathogenic substances having a selective action, such as, for example, the so-called "pathogenesis-related proteins." Examples of such antipathogenic substances and transgenic plants capable of synthesizing such antipathogenic substances are known, for example, from EP-A-0 392 225, WO 95/33818, and EP-A-0 353 191.

The rate of application of the present ready mix microemulsion formulation may vary within wide limits and depends upon the nature of the soil, the method of application, the prevailing climatic conditions, and other factors governed by the method of application and the time of application. In one embodiment, the ready mix microemulsion formulation is generally applied at a rate of 1 to 3 L/ha. In a preferred embodiment the ready mix microemulsion formulation is applied at a rate of 1.6 to 2.0 L/ha. In a specific embodiment the ready mix microemulsion formulation is applied at a rate of 2.0 L/ha. In another specific embodiment the ready mix microemulsion formulation is applied at a rate of 1.6 L/ha.

The following examples illustrate the practice of the present subject matter in some of its embodiments, but should not be construed as limiting the scope of the present subject matter, which is defined by the appended claims.

EXAMPLES

Formulation Example

One exemplary embodiment of the ready mix microemulsion formulation is illustrated in Table 1, below:

TABLE 1

| Ingredient | % w/w |
|---|---|
| Trinexapac-ethyl | 2.140 |
| Chlormequat Chloride | 25.000 |
| Iso-tridecyl alcohol polyglycol ether | 2.140 |
| Castor oil ethoxylate | 0.537 |

(continued)

| Ingredient | % w/w |
|---|---|
| Dodecyl benzene sulphonate-isopropyl amine salt | 1.241 |
| Propylene carbonate | 1.241 |
| Rape seed oil methylated | 4.648 |
| Tallow amine ethoxylate | 27.777 |
| Dipropylene glycol | 11.111 |
| Propylene glycol | 10.463 |
| Water | 13.704 |
| d= 1.080 g/l. | |

The experiments below were conducted using (i) the microemulsion formulation of table 1, (ii) trinexapac-ethyl 175 g/L EC (commercially available Trimax and Optimus) and (iii) chlormequat-chloride 460 g/l SC (commercially available Cyclo C5).

Lodging Index Calculation

There are six classes of plant lodging, as shown below and illustrated in Fig. 1.

**0:** no lodging,
**1:** 5 to 25° dip,
**2:** 25 to 45° dip,
**3:** 45 to 65° dip,
**4:** 65 to 85° dip,
**5:** total lodging (90°).

Class 0 plants exhibit no lodging, whereas plants categorized into classes 1-4 exhibit increasing degrees of lodging. Finally, class 5 plants exhibit total lodging.

The percentage of plants per plot that were classified into each of the six classes above was determined by visual estimation. Therefore, each plot was assigned six percentages, one for each of the six classes of plant lodging. The six percentages were then used to calculate the lodging index, as follows:
The lodging index (Caldicott indice) was calculated on a 0-100 scale using the formula:

$$\text{Caldicott} = [ \ \Sigma \ (\text{class 0 to 5} \times \% \text{ area in that class})] \ / \ 5.$$

**EXPERIMENT I- Plant Lodging**

This trial was set up on crop variety Hysun. The crop description and its implantation are summarized in the table below. Crop stage at each application was BBCH 31.

**TABLE 2: Site description and application equipment**

| | |
|---|---|
| Treated crop | Winter wheat |
| Variety | Hysun |
| Crop stage | BBCH 31 |
| Planting Rate | 79 Kg/Ha |
| Planting method | Seeded |
| Trial map | Randomized complete block |
| Replications | 4 |

(continued)

| | |
|---|---|
| Plot (wide x length) | 8 m x 3 m |
| Soil type | Loam |
| Application placement | BROFOL: Broadcast foliar |
| Application timing | POEMCR: Post emergence crop |
| Appl. Equipment: | DP 2.75 |
| Equipment Type: | Spaibl |
| Operation Pressure, Unit: | 1,4 BAR |
| Nozzle Type: | TEEJET |
| Band Width, Unit: | 275 CM |
| Boom Length, Unit: | 275 CM |
| Carrier: | Water |
| Spray Volume, Unit: | 200 1/HA |
| Mix Size, Unit: | 2 liters |
| Propellant: | Comair |

**TABLE 3: Experimental results- Comparison of lodging between the microemulsion and tank mix**

| No. | Name | Rate 1/ha | g/ha of active | Lodging after 95 DAA |
|---|---|---|---|---|
| 1 | Untreated Check | | | 81.28 |
| 2 | Ready mix microemulsion of table 1 | 1.6 | 36[a] + 432[b] | **29.28** |
| 3 | Trimaxx + Cycocel C5 (tank mix) | 0.2 0.94 | 35[a]+ 432.5[b] | 42 |
| 4 | Ready mix microemulsion of table 1 | 2 | 45[a] + 540[b] | **26.28** |
| 5 | Trimaxx + Cycocel C5 (tank mix) | 0.26 1.17 | 45.5[a] 538.2[b] | 40.78 |
| [a] represents g/ha of trinexapac ethyl and [b] represents g/ha of chlormequat chloride. | | | | |

**TABLE 4: Experimental results- Comparison of lodging between the microemulsion, tank mix and individuals**

| No. | Name | Rate 1/ha | g/ha of active | Lodging after 95 DAA |
|---|---|---|---|---|
| 1 | Untreated Check | | | 81.28 |
| 2 | Trimaxx | 0.26 | 45.5 | 70 |
| 3 | Cycocel C5 | 1.17 | 538.2 | 54.28 |
| 4 | Trimaxx + Cycocel C5 (tank mix) | 0.26 1.17 | 45.5[a] 538.2[b] | 40.78 |
| 5 | Ready mix microemulsion of table 1 | 2 | 45[a] + 540[b] | **26.28** |
| [a] represents g/ha of trinexapac ethyl and [b] represents g/ha of chlormequat chloride. | | | | |

As can be seen from Tables 3 and 4, application of the present ready mix microemulsion formulation unexpectedly results in a greater reduction in plant lodging than application of trinexapec-ethyl and chlormequat chloride, individually, and tank mixes thereof.

## EXPERIMENT II- Plant Lodging

This trial was set up on crop variety Barok. The crop description and its implantation are summarized in the table below. Crop stage at each application: BBCH 31.

### TABLE 5: Site description and application equipment

| | |
|---|---|
| Treated crop | Winter wheat |
| Variety | Barok |
| Crop stage | BBCH 31 |
| Planting Rate | 130 Kg/Ha |
| Planting method | Seeded |
| Trial map | Randomized complete block |
| Replications | 4 |
| Plot (wide x length) | 8 m x 3 m |
| Soil type | Loam |
| Application placement | BROFOL: Broadcast foliar |
| Application timing | POEMCR: Post emergence crop |
| Appl. Equipment: | DP 2.75 |
| Equipment Type: | Spaibl |
| Operation Pressure, Unit: | 1,6 BAR |
| Nozzle Type: | TEEJET |
| Band Width, Unit: | 275 CM |
| Boom Length, Unit: | 275 CM |
| Carrier: | Water |
| Spray Volume, Unit: | 200 1/HA |
| Mix Size, Unit: | 2 liters |
| Propellant: | Comair |

### TABLE 6: Experimental results- Comparison of lodging between the microemulsion and tank mix

| No. | Name | Rate 1/ha | g/ha of active | Lodging after 95 DAA |
|---|---|---|---|---|
| 1 | Untreated check | | | 82.5 |
| 2 | Ready mix microemulsion of table 1 | 1.6 | 432[b] + | **31.5** |
| 3 | Trimaxx + Cycocel C5 (tank mix) | 0.2 0.94 | 35[a]+ 432.5[b] | 41.5 |
| 4 | Ready mix microemulsion of table 1 | 2 | 45[a] + 540[b] | **29.5** |
| 5 | Trimaxx + Cycocel C5 (tank mix) | 0.26 1.17 | 45.5[a] 538.2[b] | 41 |
| [a] represents g/ha of trinexapac ethyl and [b] represents g/ha of chlormequat chloride. | | | | |

### TABLE 7: Experimental results- Comparison of lodging between the microemulsion, tank mix and individuals

| No. | Name | Rate 1/ha | g/ha of active | Lodging after 95 DAA |
|---|---|---|---|---|
| 1 | Untreated check | | | 82.5 |

(continued)

| No. | Name | Rate 1/ha | g/ha of active | Lodging after 95 DAA |
|---|---|---|---|---|
| 2 | Trimaxx | 0.26 | 45.5 | 72.5 |
| 3 | Cycocel C5 | 1.17 | 538.2 | 57 |
| 4 | Trimaxx +<br>Cycocel C5 (tank mix) | 0.26<br>1.17 | 45.5[a]<br>538.2[b] | 41 |
| 5 | Ready mix microemulsion of table 1 | 2 | 45[a] + 540[b] | **29.5** |
| [a] represents g/ha of trinexapac ethyl and [b] represents g/ha of chlormequat chloride. | | | | |

As can be seen from Tables 6 and 7, application of the present ready mix microemulsion formulation unexpectedly results in a greater reduction in plant lodging than application of trinexapec-ethyl and chlormequat chloride, individually, and tank mixes thereof.

### EXPERIMENT III- Plant Height

This trial was set up on crop variety Smaragd. The crop description and its implantation are summarized in the table below. Crop stage at each application was BBCH 31.

**TABLE 8: Site description and application equipment**

| | |
|---|---|
| Treated Crop | Winter wheat |
| Variety | Smaragd |
| BBCH Scale | BCER |
| Crop Scientific Name | Triticum aesti |
| Description | plant height |
| Part Rated | PLANT C |
| Rating Type | HEIGHT |
| Rating Unit | CM |
| Replications | 4 |
| Sample Size, Unit | 10 Plants |
| Collection Basis, Unit | 1 PLOT |
| Crop Stage Majority | 75 |
| Crop Stage Scale | BBCH 31 |
| Days After First/Last Applic. | 65 |
| Trt-Eval Interval | 59 DA-A |
| Plant-Eval Interval | 281 DP-1 |
| Application Method: | Spray |
| Application Timing: | Accrst |
| Equipment Type: | Bacspr |
| Operation Pressure, Unit: | 2.8 BAR |
| Nozzle Type: | TEEJET XR |
| Nozzle Size: | 110 02 VS |

**TABLE 9: Comparison of plant height between the microemulsion and tank mix**

| Treatment No. | Treatment Name | Rate 1/ha | g/ha of activ e | Height CM |
|---|---|---|---|---|
| 1 | Untreated check | - | - | 97 |
| 2 | Ready mix microemulsion of table 1 | 1.6 | $36^a + 432^b$ | **76.5** |
| 3 | Optimus 175 EC + Cycocel 750 SL (tank mix). | 0.2 0.58 | $35^a + 435^b$ | 78.8 |
| 4 | Ready mix microemulsion of table 1 | 2 | $45^a + 540^b$ | **76** |
| 5 | Optimus 175 EC + Cycocel 750 SL (tank mix) | 0.26 0.72 | $45.5^a + 540^b$ | 78.5 |
| [a] represents g/ha of trinexapac ethyl and [b] represents g/ha of chlormequat chloride. | | | | |

**TABLE 10: Comparison of plant height between the microemulsion, tank mix and individuals compounds**

| Treatment No. | Treatment Name | Rate 1/ha | g/ha of active | Height CM |
|---|---|---|---|---|
| 1 | Untreated check | - | - | 97 |
| 2 | Ready mix microemulsion of table 1 | 2 | $45^a + 540^b$ | **76** |
| 3 | Optimus 175 EC + Cycocel 750 SL (tank mix) | 0.26 0.72 | $45.5^a + 540^b$ | 78.5 |
| 4 | Optimus 175 EC | 0.26 | $45.5^a$ | 81.3 |
| 5 | Cycocel 750 SL | 0.72 | $540^b$ | 81.3 |
| [a] represents g/ha of trinexapac ethyl and [b] represents g/ha of chlormequat chloride. | | | | |

As can be seen from Tables 9 and 10, application of the present ready mix microemulsion formulation unexpectedly results in a greater decrease in plant height (cm) than that exhibited by plants to which trinexapac-ethyl and chlormequat chloride, individually, and tank mixes thereof were applied.

**Claims**

1.   A composition comprising trinexapac-ethyl and chlormequat chloride; wherein the composition is a ready mix microemulsion formulation.

2.   The composition of claim 1, further comprising one or more components selected from the group consisting of solvents, solubilizers, and surfactants.

3.   The composition of claim 2, wherein the solvents are selected from the group consisting of water, glycols and methylated seed oils, petroleum naphtha, alkylated naphthalene,2-ethyl hexanol, d-limonene, isophorone, p-xylene, tetrahydrofurfuryl alcohol, and combinations thereof.

4.   The composition of any one of claims 2-3, wherein the solubilizer is selected from the group consisting of propylene carbonate, *N*-Methyl-2-pyrrolidone, N-butylpyrrolidone, N- octylpyrrolidone and DMSO.

5.   The composition of claim 4, wherein the solubilizer is propylene carbonate.

6.   The composition of any one of claims 2-5, wherein the surfactants are selected from the group consisting of tallow amine ethoxylate, iso-tridecyl alcohol polyglycol ether, dodecylbenzene sulphonate-isopropylamine, alkoxylated fatty alcohols, ethoxylated polysorbate, ethoxylated castor oil salts thereof, and combinations thereof.

7.   The composition of claim 1 further comprising:

(a) solvents, wherein the solvents comprise water, dipropylene glycol, propylene glycol, and methylated rape seed oil;

(b) a solubilizer comprising propylene carbonate; and

(c) surfactants, wherein the surfactants comprise tallow amine ethoxylate, dodecylbenzene sulphonate-isopropylamine, castor oil ethoxylate, iso-tridecyl alcohol polyglycol ether and salts thereof.

8. The composition of any one of claims 1-7, wherein the trinexapac-ethyl is present in an amount ranging from about 0.1-10% w/w based on the total weight of the composition.

9. The composition of any one of claims 1-8, wherein the chlormequat chloride is present in an amount ranging from about 20-30% w/w based on the total weight of the composition.

10. The composition of any one of claims 1-8, wherein the ready mix microemulsion formulation is packaged within a single vessel and is ready to use directly after dilution.

11. A method for regulating plant growth comprising applying to one or more plants an effective amount of the composition according to any one of claims 1-10.

12. A method for preventing and/or reducing lodging of crop plants comprising applying to one or more plants an effective amount of the composition according to any one of claims 1-10.

13. A method for enhancing roots system comprising applying to one or more plants an effective amount of the composition according to any one of claims 1-10.

14. A method for improving uptake of one or more nutrients by one or more plants comprising applying to one or more plants an effective amount of the composition according to any one of claims 1-10.

15. The method of any one of claims 11-14, wherein the one or more plants are monocotyledonous plants.

16. The method of any one of claims 11-14, wherein the one or more plants are selected from the group consisting of cereals, rice, maize, and sugar cane.

17. The method of any one of claims 11-16, wherein an effective amount of the composition is applied at a rate of 1.6 to 2.0 L/ha.

**Patentansprüche**

1. Eine Zusammensetzung umfassend Trinexapac-ethyl und Chlormequat-chlorid; worin die Zusammensetzung eine fertig gemischte Mikroemulsionsformulierung ist.

2. Die Zusammensetzung gemäß Anspruch 1, weiter umfassend eine oder mehrere Komponenten gewählt aus der Gruppe bestehend aus Lösungsmitteln, Lösungsvermittlern und oberflächenaktiven Stoffen.

3. Die Zusammensetzung gemäß Anspruch 2, worin die Lösungsmittel gewählt sind aus der Gruppe bestehend aus Wasser, Glykolen und methylierten Samenölen, Petrol-Naphtha (Rohbenzin), alkyliertem Naphthalen, 2-Ethylhexanol, d-Limonen, Isophoron, p-Xylen, Tetrahydrofurfurylalkohol und Kombinationen daraus.

4. Die Zusammensetzung gemäß irgendeinem der Ansprüche 2 - 3, worin der Lösungsvermittler gewählt ist aus der Gruppe bestehend aus Propylencarbonat, *N*-Methyl-2-pyrrolidon, N-Butylpyrrolidon, N-Octylpyrrolidon und DMSO.

5. Die Zusammensetzung gemäß Anspruch 4, worin der Lösungsvermittler Propylencarbonat ist.

6. Die Zusammensetzung gemäß irgendeinem der Ansprüche 2 - 5, worin die oberflächenaktiven Stoffe gewählt sind aus der Gruppe bestehend aus Talgaminethoxylat, Iso-Tridecylalkohol Polyglykolether, Dodecylbenzensulfonat-Isopropylamin, alkoxylierten Fettalkoholen, ethoxyliertem Polysorbat, ethoxylierten Riziniußölsalzen davon, und Kombinationen daraus.

7. Die Zusammensetzung gemäß Anspruch 1, weiter umfassend:

   (a) Lösungsmittel, worin die Lösungsmittel Wasser, Dipropylenglykol, Propylenglykol, und methyliertes Rapsöl umfassen;
   (b) einen Lösungsvermittler umfassend Propylencarbonat; und
   (c) oberflächenaktive Stoffe, worin die oberflächenaktiven Stoffe Talgaminethoxylat, Dodecylbenzensulfonat-Isopropylamin, Riziniußölethoxylat, Iso-Tridecylalkohol Polyglykolether und Salze davon umfassen.

8. Die Zusammensetzung gemäß irgendeinem der Ansprüche 1 - 7, worin das Trinexapac-ethyl in einer Menge im Bereich von ungefähr 0,1 - 10% m/m, basierend auf dem Gesamtgewicht der Zusammensetzung, vorhanden ist.

9. Die Zusammensetzung gemäß irgendeinem der Ansprüche 1 - 8, worin das Chlormequatchlorid in einer Menge im Bereich von ungefähr 20-30% m/m, basierend auf dem Gesamtgewicht der Zusammensetzung, vorhanden ist.

10. Die Zusammensetzung gemäß irgendeinem der Ansprüche 1 - 8, worin die fertig gemischte Mikroemulsionsformulierung innerhalb eines einzelnen Gefäßes verpackt ist und direkt nach Verdünnung gebrauchsfertig ist.

11. Ein Verfahren zur Regulierung des Pflanzenwachstums umfassend das Aufbringen einer wirksamen Menge der Zusammensetzung gemäß irgendeinem der Ansprüche 1 - 10 auf eine oder mehrere Pflanzen.

12. Ein Verfahren zur Verhütung und/oder Verminderung der Lagerbildung von Kulturpflanzen umfassend das Aufbringen einer wirksamen Menge der Zusammensetzung gemäß irgendeinem der Ansprüche 1 - 10 auf eine oder mehrere Pflanzen.

13. Ein Verfahren zur Verbesserung des Wurzelsystems umfassend das Aufbringen einer wirksamen Menge der Zusammensetzung gemäß irgendeinem der Ansprüche 1 - 10 auf eine oder mehrere Pflanzen.

14. Ein Verfahren zur Verbesserung der Aufnahme von einem oder mehreren Nährstoffen durch eine oder mehrere Pflanzen umfassend das Aufbringen einer wirksamen Menge der Zusammensetzung gemäß irgendeinem der Ansprüche 1 - 10 auf eine oder mehrere Pflanzen.

15. Das Verfahren gemäß irgendeinem der Ansprüche 11 - 14, worin die eine oder mehrere Pflanzen einkeimblättrige Pflanzen sind.

16. Das Verfahren gemäß irgendeinem der Ansprüche 11-14, worin die eine oder mehrere Pflanzen gewählt sind aus der Gruppe bestehend aus Getreide, Reis, Mais, und Zuckerrohr.

17. Das Verfahren gemäß irgendeinem der Ansprüche 11-16, worin eine wirksame Menge der Zusammensetzung in einer Menge von 1,6 - 2,0 1/ha aufgebracht wird.

**Revendications**

1. Composition comprenant du trinexapac-éthyl et du chlorure de chlorméquat, laquelle composition est une formulation de microémulsion en mélange prêt à l'emploi.

2. Composition conforme à la revendication 1, qui comprend en outre un ou plusieurs composant(s) choisi(s) dans l'ensemble formé par les solvants, les agents de solubilisation et les tensioactifs.

3. Composition conforme à la revendication 2, dans laquelle les solvants sont choisis dans l'ensemble formé par l'eau, les glycols, les huiles de graines méthylées, le naphta, les alkyl-naphtalènes, le 2-éthyl-hexanol, le d-limonène, l'isophorone, le para-xylène, l'alcool tétrahydro-furfurylique, et leurs combinaisons.

4. Composition conforme à l'une des revendications 2 à 3, dans laquelle l'agent de solubilisation est choisi dans l'ensemble formé par le carbonate de propylène, la N-méthyl-2-pyrrolidone, la N-butyl-pyrrolidone, la N-octyl-pyrrolidone, et le diméthyl-sulfoxyde.

5. Composition conforme à la revendication 4, dans laquelle l'agent de solubilisation est du carbonate de propylène.

**6.** Composition conforme à l'une des revendications 2 à 5, dans laquelle les tensioactifs sont choisis dans l'ensemble formé par le suif aminé éthoxylé, les éthers de polyglycol et d'alcool isotridécylique, le dodécyl-benzène-sulfonate d'isopropyl-amine, les alcools gras alcoxy-lés, les polysorbates éthoxylées, les sels d'huile de ricin éthoxylée, et leurs combinaisons.

**7.** Composition conforme à la revendication 1, qui comprend en outre

a) des solvants, lesquels solvants comprennent l'eau, le dipropylène-glycol, le propylène-glycol et l'huile de colza méthylée,
b) un agent de solubilisation comprenant du carbonate de propylène,
c) et des tensioactifs, lesquels tensioactifs comprennent le suif aminé éthoxylé, le dodécyl-benzène-sulfonate d'isopropyl-amine, l'huile de ricin éthoxylée, les éthers de polyglycol et d'alcool isotridécylique, et leurs sels.

**8.** Composition conforme à l'une des revendications 1 à 7, dans laquelle le trinexapac-éthyl se trouve en une proportion valant à peu près de 0,1 à 10 %, en poids rapporté au poids total de la composition.

**9.** Composition conforme à l'une des revendications 1 à 8, dans laquelle le chlorure de chlorméquat se trouve en une proportion valant à peu près de 20 à 30 %, en poids rapporté au poids total de la composition.

**10.** Composition conforme à l'une des revendications 1 à 8, dans laquelle la formulation de microémulsion en mélange prêt à l'emploi est contenue dans un seul récipient d'emballage et prête à être utilisée directement après dilution.

**11.** Procédé de régulation de la croissance de végétaux, comprenant le fait d'appliquer, sur un végétal ou des végétaux, une composition conforme à l'une des revendications 1 à 10, en une dose efficace.

**12.** Procédé visant à empêcher et/ou réduire la verse de végétaux cultivés, comprenant le fait d'appliquer, sur un végétal ou des végétaux, une composition conforme à l'une des revendications 1 à 10, en une dose efficace.

**13.** Procédé visant à fortifier le système racinaire, comprenant le fait d'appliquer, sur un végétal ou des végétaux, une composition conforme à l'une des revendications 1 à 10, en une dose efficace.

**14.** Procédé visant à améliorer l'absorption d'un ou plusieurs nutriment(s) par un végétal ou des végétaux, comprenant le fait d'appliquer, sur un végétal ou des végétaux, une composition conforme à l'une des revendications 1 à 10, en une dose efficace.

**15.** Procédé conforme à l'une des revendications 11 à 14, dans lequel le ou les végétaux sont des végétaux monocotylédones.

**16.** Procédé conforme à l'une des revendications 11 à 14, dans lequel le végétal ou les végétaux est ou sont choisi(s) dans l'ensemble formé par les céréales, le riz, le maïs et la canne à sucre.

**17.** Procédé conforme à l'une des revendications 11 à 16, dans lequel la dose efficace en laquelle la composition est appliquée est de 1,6 à 2,0 litres par hectare.

Top of the crop

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030118614 A
- WO 2012130924 A
- EP 0392225 A
- WO 9533818 A
- EP 0353191 A

### Non-patent literature cited in the description

- Effect of growth regulators on winter wheat varieties. *Progress in Plant Protection,* 2006, vol. 46 (2), 246-48
- Influence of growth regulator Moddus 250 EC (trinexapac ethyl) on group, yield, and grain quality of winter wheat. *Progress in Plant Protection,* 2003, vol. 43 (2), 859-62
- Biological evaluation of retardants in spring barley. *Progress in Plant Protection,* 2004, vol. 44 (2), 962-65
- Application of plant growth regulators Moddus 250 EC and Antywylegacz Plynny 675 SL (CCC) in winter wheat. *Progress in Plant Protection,* 2004, vol. 44 (2), 823-27